# EUROPÄISCHE PATENTSCHRIFT

(11) **EP 1 423 663 B1**
(45) Veröffentlichungstag und Bekanntmachung des Hinweises auf die Patenterteilung: **28.11.2018**
(21) Anmeldenummer: 02774521.5
(22) Anmeldetag: 17.08.2002
(51) Int. Cl.: G01F 1/32

(54) **KORROSIONSBESTÄNDIGER WIRBELSTRÖMUNGSAUFNEHMER**
CORROSION-RESISTANT TURBULENT FLOW METER
COMPTEUR DE COURANT TOURBILLONNAIRE RESISTANT A LA CORROSION

(30) Priorität: 04.09.2001 EP 01121150
(43) Veröffentlichungstag der Anmeldung: 02.06.2004
(73) Patentinhaber: Endress + Hauser Flowtec AG, 4153 Reinach (CH)
(72) Erfinder: KOUDAL, Ole, CH-5400 Baden (CH); NIERLICH, Thomas, 79539 Lörrach (DE); HÖCKER, Rainer, 79761 Waldshut (DE)
(74) Vertreter: Andres, Angelika Maria
(86) Internationale Anmeldenummer: PCT/EP2002/009213
(87) Internationale Veröffentlichungsnummer: WO 2003/021201

(56) Entgegenhaltungen:
- WO-A1-00/09973
- DE-T1- 19 882 239
- JP-A- 2000 002 567
- US-A- 3 587 312
- US-A- 6 003 383
- US-A- 6 003 384
- US-B1- 6 237 425

## Beschreibung

Die Erfindung betrifft Wirbelströmungsaufnehmer zur Messung des Volumendurchflusses, des Massedurchflusses oder der Strömungsgeschwindigkeit, des in einem Messrohr in einer Strömungsrichtung fließenden Fluids mit einem über einem Durchmesser des Messrohrs angeordneten Staukörper, der der Erzeugung Kármán'scher Wirbel dient.

Der Volumendurchfluss bzw. der Massedurchfluss ist per definitionem das pro Zeiteinheit durch den Querschnitt des Messrohrs strömende Volumen bzw. die pro Zeiteinheit durch den Querschnitt des Messrohrs strömende Masse des Fluid.

Bei Betrieb eines derartigen Wirbelströmungsaufnehmer entsteht bekanntlich stromabwärts des Staukörpers eine Kármán'sche Wirbelstraße, deren Druckschwankungen von einem Wirbelsensor in ein elektrisches Signal umgeformt werden, dessen Frequenz proportional zum Volumendurchfluss bzw. zur Strömungsgeschwindigkeit ist.

In der US-A 60 03 384 ist ein heute üblicher Wirbelströmungsaufnehmer zur Messung des Volumendurchflusses oder der Strömungsgeschwindigkeit eines Fluids beschrieben, das in einem eine Rohrwand aufweisenden Messrohr in einer Strömungsrichtung fließt, welcher Wirbelströmungsaufnehmer umfasst:
- einen entlang eines Durchmessers des Messrohrs angeordneten Staukörper, der
   -- der Erzeugung Kármán'scher Wirbel dient und
   -- an einer ersten und einer zweiten Fixierstelle, die einander gegenüber liegen, mit der Rohrwand des Messrohrs von innen verbunden ist,
- einen auf von den Wirbeln erzeugte Druckschwankungen ansprechenden Wirbelsensor, der stromabwärts vom Staukörper in eine Bohrung der Rohrwand des Messrohrs eingesetzt ist und diese Bohrung abdichtet,
- wobei das Zentrum der Bohrung zusammen mit dem Zentrum der ersten Fixierstelle des Staukörpers auf einer Mantellinie des Messrohrs liegt und
- wobei der Wirbelsensor umfasst:
   -- eine die Bohrung überdeckende Membran mit einer fluid-zugewandten ersten Oberfläche und einer fluid-abgewandten zweiten Oberfläche,
   -- eine an der ersten Oberfläche der Membran befestigte keilförmige Sensorfahne, die
      --- kürzer als der Durchmesser des Messrohrs ist sowie
      --- mit der Mantellinie des Messrohrs fluchtende Hauptflächen sowie eine Frontkante aufweist, und
   -- ein an der zweiten Oberfläche befestigtes Sensorelement.

Wird auch noch die Temperatur des Fluids mittels eines Temperatursensors gemessen, so kann der Massedurchfluss aus dem Volumendurchfluss, aus der Art des Fluids und dessen Eigenschaften sowie der momentanen Temperatur ermittelt, z.B. mittels eines Mikroprozessors berechnet, werden.

Dieser Sachverhalt ist bei Wirbelströmungsaufnehmern mit unterschiedlichen Arten von Wirbelsensoren schon lange vorbeschrieben. So zeigen die US-A 40 48 854 und die US-A 44 04 858 jeweils einen Temperatursensor, der an der Rohrwand des Messrohrs von innen so angeordnet ist, dass er vom strömenden Fluid überstrichen wird.

In der JP-A 2000-2567 ist ein Wirbelströmungsaufnehmer zur Messung des Massedurchflusses, des Volumendurchflusses oder der Strömungsgeschwindigkeit eines Fluids beschrieben, das in einem eine Rohrwand aufweisenden Messrohr in einer Strömungsrichtung fließt, welcher Wirbelströmungsaufnehmer umfasst:
- einen einseitig an der Rohrwand von innen mittels einer Bodenplatte fixierten Flügel, der
   -- im Betrieb Kármán'sche Wirbel erzeugt,
   -- kürzer als ein Durchmesser des Messrohrs ist und
   -- senkrecht zur Strömungsrichtung ausgerichtete parallele Hauptflächen sowie eine gerundete Frontfläche aufweist,
      --- auf der ein Temperatursensor angeordnet ist,
- in der Nähe der Fixierstelle befestigte erste Sensorelemente für von den Kármán'schen Wirbeln erzeugte Druckschwankungen des strömenden Fluids und
- in der Nähe der Fixierstelle befestigte zweite Sensorelemente für vom strömenden Fluid erzeugte Auslenkungen des Flügels.

Auch dieser Temperatursensor wird vom strömenden Fluid überstrichen und ist somit, wie die Erfinder festgestellt haben, nicht gegenüber allen im Betrieb vorkommenden Fluiden resistent, d.h. manche Fluide korrodieren derart angeordnete Temperatursensoren. Diese den Temperatursensor korrodierenden Fluide müssen daher durch den Hersteller der Wirbelströmungsaufnehmer von der Verwendung zusammen mit ihm ausgeschlossen werden. Ein derartiger Ausschluss schmälert jedoch die Breite der Anwendung dieser Wirbelströmungsaufnehmer, also die Universalität ihrer Anwendungen, und somit auch ihre Attraktivität auf dem Markt.

Aus der US-B 62 37 425 ist ein Wirbelströmungsaufnehmer bekannt, bei dem ein Temperatursensor in einen massiven Staukörper eingesetzt ist.

Eine der Erfindung zugrundeliegende Aufgabe besteht darin, Wirbelströmungsaufnehmer mit einem Staukörper und mit einem in der Rohrwand des Messrohrs fixierten Wirbelsensor sowie mit einem Temperatursensor anzugeben, der derart angeordnet ist, dass der jeweilige Wirbelströmungsaufnehmer auch zusammen mit solchen Fluiden benutzt werden darf, die den Temperatursensor korrodieren.

Zur Lösung dieser Aufgabe besteht die Erfindung in einem Wirbelströmungsaufnehmer zur Messung des Massedurchflusses, des Volumendurchflusses oder der Strömungsgeschwindigkeit eines Fluids, das in einem eine Rohrwand aufweisenden Messrohr in einer Strömungsrichtung fließt, welcher Wirbelströmungsaufnehmer umfasst:
- einen entlang eines Durchmessers des Messrohrs angeordneten Staukörper, der
   -- der Erzeugung Kármán'scher Wirbel dient und
   -- an einer ersten und einer zweiten Fixierstelle, die einander gegenüber liegen, mit der Rohrwand des Messrohrs von innen verbunden ist,
- einen auf von den Wirbeln erzeugte Druckschwankungen ansprechenden Wirbelsensor, der stromabwärts vom Staukörper in eine Bohrung der Rohrwand des Messrohrs eingesetzt ist und diese Bohrung abdichtet,
- wobei das Zentrum der Bohrung zusammen mit dem Zentrum der ersten Fixierstelle des Staukörpers auf einer Mantellinie des Messrohrs liegt und
- wobei der Wirbelsensor umfasst:
   -- eine die Bohrung überdeckende Membran mit einer fluid-zugewandten ersten Oberfläche und einer fluid-abgewandten zweiten Oberfläche,
   -- eine an der ersten Oberfläche der Membran befestigte Sensorfahne, die
      --- kürzer als der Durchmesser des Messrohrs ist,
      --- mit der Mantellinie des Messrohrs fluchtende Hauptflächen sowie mindestens eine Frontkante aufweist und
      --- mit einem Sackloch versehen ist, von dem ein Boden in der Nähe der mindestens einen Frontkante liegt,
   -- einen Temperatursensor, der am Boden des Sacklochs oder in der Nähe des Bodens fixiert ist, und
   -- ein an der zweiten Oberfläche befestigtes Sensorelement.

Nach einer bevorzugten Ausgestaltung der Erfindung bilden die Hauptflächen der Sensorfahne einen Keil mit einer einzigen Frontkante.

Ein Vorteil der Erfindung besteht darin, dass der Temperatursensor keine Berührungsmöglichkeit mit dem strömenden Fluid hat und somit von ihm auch nicht korrodiert werden kann. Trotzdem ist der Temperatursensor so nahe am Fluid angeordnet, dass er dessen Temperatur praktisch verzögerungslos erfasst; er ist nämlich vom Fluid lediglich durch die dünne Wand des Wirbelsensors getrennt und diese Teile sind wie die übrigen Teile des Wirbelströmungsaufnehmers aus einem Metall, bevorzugt Edelstahl, hergestellt und somit gut wärmleitend.

Ein weiterer Vorteil der Erfindung besteht darin, dass der in der Sensorfahne angeordnete Temperatursensor entsprechend dem Buch von F. P. Incropera und D. P. DeWitt "Fundamentals of Heat and Mass Transfer", 4. Edition, 1996, ISBN 0-471-30460-3, Seiten 114 bis 119 und 407 mit einem zweiten Temperatursensor zusammenarbeiten kann, der, bevorzugt von außen, am Meßrohr befestigt ist, also ebenfalls nicht mit dem Fluid in Berührung kommt. Wenn der zweite Temperatursensor vorgesehen wird, ergibt sich bekanntlich eine genauere Temperaturmessung als mit einem einzigen Temperatursensor.

Die Erfindung und weitere Vorteile werden nun anhand von Ausführungsbeispielen näher erläutert, die in den Figuren der Zeichnung dargestellt sind. Gleiche Teile sind in unterschiedlichen Figuren mit denselben Bezugszeichen bezeichnet, die jedoch weggelassen sind, wenn es die Übersichtlichkeit erfordert.
Fig. 1 zeigt in Strömungsrichtung gesehen perspektivisch und teilweise aufgeschnitten einen Wirbelströmungsaufnehmer entsprechend der ersten Variante der Erfindung,
Fig. 2 zeigt gegen die Strömungsrichtung gesehen perspektivisch und teilweise aufgeschnitten den Wirbelströmungsaufnehmer von Fig. 1,
Fig. 3 zeigt perspektivisch in einer Unteransicht den Wirbelsensor von Fig. 1 und 2, und
Fig. 4 zeigt einen perspektivischen Längschnitt des Wirbelsensors der Fig. 3,

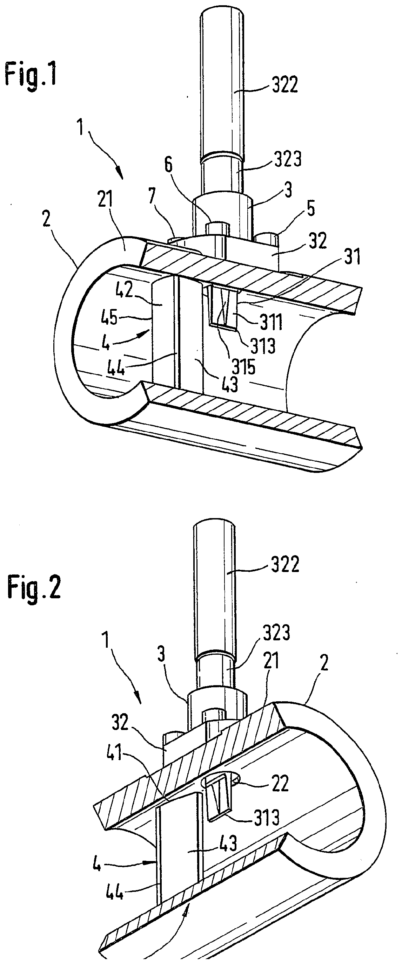

Die Fig. 1 bis 4 werden im Folgenden gemeinsam beschrieben, da alle Einzelheiten nicht in jeder Figur darstellbar sind.

Die in den Fig. 1 und 2 zunächst gezeigten und der Übersicht dienenden perspektivischen Ansichten eines Ausführungsbeispiel zeigen, einerseits in Strömungsrichtung gesehen (Fig. 1) und andererseits gegen die Strömungsrichtung gesehen (Fig. 2), einen teilweise aufgeschnittenen Wirbelströmungsaufnehmer 1 mit einem an einer Rohrwand 21 eines Messrohrs 2 fixierten und durch eine Bohrung 22 hindurch ragenden Wirbelsensor 3. Dieser ist bevorzugt ein dynamisch kompensierter Wirbelsensor mit einem kapazitiven Sensorelement, wie er in der US-A 60 03 384 beschrieben ist.

Entlang eines Durchmessers des Messrohrs 2 ist in dessen Innerem ein Staukörper 4 angeordnet, der mit dem Messrohr 2 unter Bildung einer dargestellten ersten Fixierstelle 41 und einer verdeckten zweiten Fixierstelle 41* fest verbunden ist. Das Zentrum der Bohrung 22 und das Zentrum der Fixierstelle 41 liegen auf einer Mantellinie des Messrohrs 2.

Der Staukörper 4 hat eine Prallfläche 42, gegen die im Betrieb ein zu messendes Fluid, z.B. eine Flüssigkeit, ein Gas oder ein Dampf, anströmt. Der Staukörper 4 hat ferner zwei Seitenflächen, von denen lediglich eine (vordere) Seitenfläche 43 in den Fig. 1 und 2 zu sehen ist. Von der Prallfläche 42 und den Seitenflächen werden zwei Abrisskanten gebildet, von denen lediglich eine (vordere) Abrisskante 44 vollständig und eine (hintere) Abrisskante 45 andeutungsweise in Fig. 1 zu sehen sind.

Der Staukörper 4 der Fig. 1 und 2 hat im wesentlichen die Form einer geraden Dreieck-Säule, also einer Säule mit einem dreieckigen Querschnitt. Es können jedoch auch andere übliche Formen des Staukörpers bei der Erfindung verwendet werden.

Durch das Anströmen des Fluids gegen die Prallfläche 42 bildet sich stromabwärts vom Staukörper 4 eine Kármán'sche Wirbelstraße im Fluid dadurch aus, dass an jeder Abrisskante abwechselnd Wirbel abreißen und vom strömenden Fluid mitgenommen werden. Diese Wirbel erzeugen lokale Druckschwankungen im Fluid, deren zeitbezogene Abriss-Häufigkeit, also deren sogenannte Wirbelfrequenz, ein Maß für die Strömungsgeschwindigkeit und/oder den Volumendurchfluss des Fluids ist.

Die Druckschwankungen werden mittels des Wirbelsensors 3 in ein elektrisches Signal umgeformt, das einer Auswerte-Elektronik zugeführt wird, die die Strömungsgeschwindigkeit und/oder den Volumendurchfluss des Fluids in üblicher Weise berechnet.

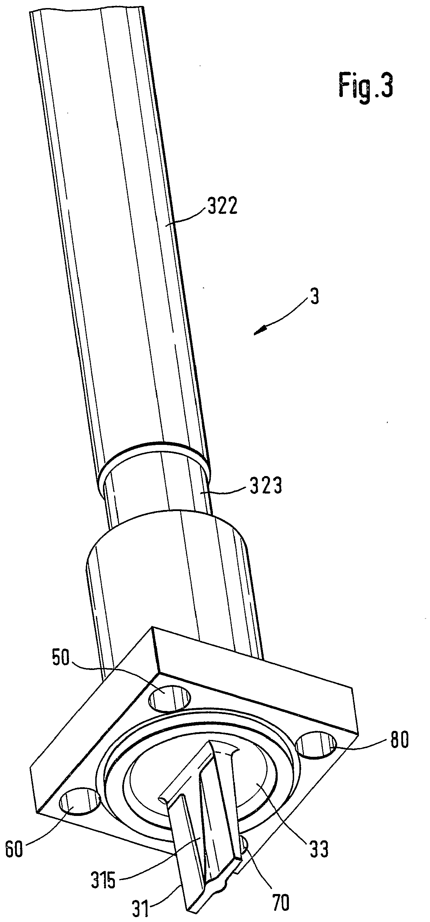

Der Wirbelsensor 3 ist stromabwärts vom Staukörper 4 in die Bohrung 22 der Rohrwand 21 des Messrohrs 2 eingesetzt und dichtet die Bohrung 22 zur Mantelfläche des Messrohrs 2 hin ab, wozu der Wirbelsensor 3 mit der Rohrwand 21 verschraubt ist. Hierzu dienen z.B. vier Schrauben, von denen in den Fig. 1 und 2 die Schrauben 5, 6, 7 zu sehen sind, während in Fig. 3 zugehörige Bohrungen 50, 60, 70, 80 dargestellt sind.

Vom Wirbelsensor 3 ist eine in den Fig. 1 und 2 in das Innere des Messrohrs 2 durch die Bohrung 22 der Rohrwand 21 hindurch ragende keilförmige Sensorfahne 31 und eine Gehäusekappe 32 zu sehen. Die Gehäusekappe 32 läuft unter Einfügung eines dünner-wandigen Zwischenstücks 323 in eine Verlängerung 322 aus, vgl. die erwähnte US-A 60 03 384.

Die Sensorfahne 31 hat Hauptflächen, von denen in den Fig. 1 und 2 nur die Hauptfläche 311 zu sehen ist. Die Hauptflächen fluchten mit der erwähnten Mantellinie des Messrohrs 2 und bilden eine Frontkante 313. Die Sensorfahne 31 kann auch andere geeignete Raumformen haben; so kann sie z.B. zwei parallele Hauptflächen aufweisen, die zwei parallele Frontkanten bilden.

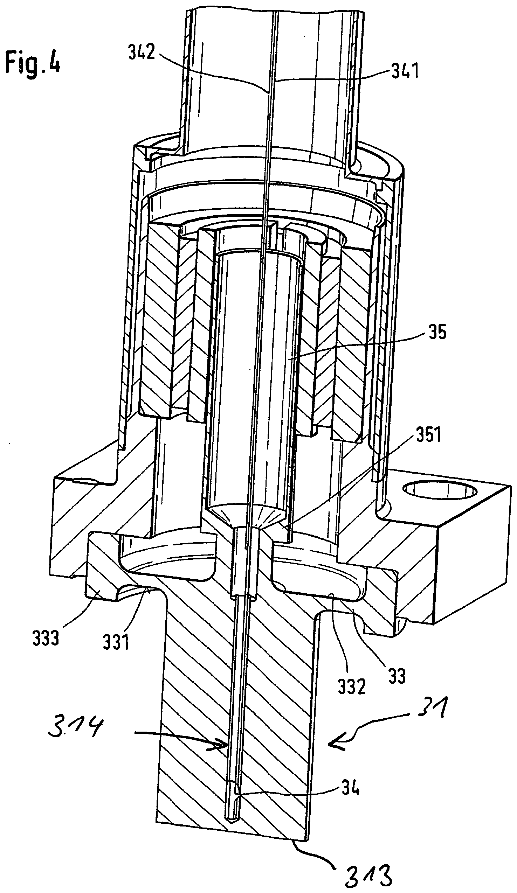

Die Sensorfahne 31 ist kürzer als der Durchmesser des Messrohrs 2; sie ist ferner biegesteif und weist ein Sackloch 314 auf (nur in Fig. 4 zu sehen). Damit das Sackloch 314 einen ausreichenden Durchmesser hat, treten aus den Hauptflächen Wandteile hervor, von denen in Fig. 2 der Wandteil 315 angedeutet ist. Das Sackloch 314 reicht bis in die Nähe der Frontkante 313 und hat dort einen Boden.

Zum Wirbelsensor 3 gehört ferner eine die Bohrung 22 überdeckende Membran 33 mit einer fluid-zugewandten ersten Oberfläche 331 und einer fluid-abgewandten zweiten Oberfläche 332, siehe die Fig. 3 und 4. An der Oberfläche 331 ist die Sensorfahne 31 fixiert und an der Oberfläche 332 ein Sensorelement 35. Bevorzugt sind die Sensorfahne 31, die Membran 33, deren ringförmiger Rand 333 und der an der Membran 33 befestigte Teil 351 des Sensorelements 35 aus einem einzigen Materialstück, z.B. Metall, insb. Edelstahl, hergestellt. Das Sensorelement 35 erzeugt das oben erwähnte Signal, dessen Frequenz proportional zum Volumendurchfluss des strömenden Fluids ist.

In der Nähe des Bodens des Sacklochs 314 ist ein Temperatursensor 34 fixiert. Zuleitungen 341, 342 des Temperatursensors 34 führen zentral nach oben durch den Wirbelsensor 3 hindurch.

Eine der Zuleitungen 341, 342 kann entfallen, wenn der Temperatursensor 34 einseitig mit der Sensorfahne 31 elektrisch kontaktiert ist und somit auf dem Potential eines Schaltungsnullpunkts liegt. Der Temperatursensor 34 ist bevorzugt ein Platin-Widerstand.

Da die Sensorfahne 31 und insb. deren Wandteil 315 ausreichend dünn gemacht werden können und außerdem bevorzugt aus Metall bestehen, liegt der Temperatursensor 34 praktisch auf der momentanen Temperatur des an der Sensorfahne 31 vorbeiströmenden Fluids und ist wegen der geringen Wärme-Kapazität der Anordnung auch sehr gut in der Lage, Temperaturänderungen des Fluids ausreichend schnell und praktisch verzögerungslos zu folgen. Somit kann aus der vom Temperatursensor 34 gemessenen Temperatur des Fluids und aus dem Signal des Wirbelsensors 3 der Massedurchfluss in üblicher Weise berechnet werden.

## Patentansprüche

1. Wirbelströmungsaufnehmer (1) zur Messung des Massedurchflusses, des Volumendurchflusses oder der Strömungsgeschwindigkeit eines Fluids, das in einem eine Rohrwand (21) aufweisenden Meßrohr (2) des Wirbelströmungsaufnehmers (1) in einer Strömungsrichtung fließt, welcher Wirbelströmungsaufnehmer umfaßt:
- einen entlang eines Durchmessers des Meßrohrs (2) angeordneten Staukörper (4), der
-- der Erzeugung Kármán'scher Wirbel dient und
-- an einer ersten und einer zweiten Fixierstelle (41,41*), die einander gegenüber liegen, mit der Rohrwand des Meßrohrs von innen verbunden ist,
- einen auf von den Wirbeln erzeugte Druckschwankungen ansprechenden Wirbelsensor (3), der stromabwärts vom Staukörper in eine Bohrung (22) der Rohrwand (21) des Meßrohrs eingesetzt ist und diese Bohrung abdichtet,
- wobei das Zentrum der Bohrung (22) zusammen mit dem Zentrum der ersten Fixierstelle (41) des Staukörpers (4) auf einer Mantellinie des Meßrohrs (2) liegt und
- wobei der Wirbelsensor (3) umfaßt:
-- eine die Bohrung (22) überdeckende Membran (33) mit einer fluid-zugewandten ersten Oberfläche (331) und einer fluid-abgewandten zweiten Oberfläche (332),
-- eine an der ersten Oberfläche der Membran befestigte Sensorfahne (31), die
--- kürzer als der Durchmesser des Meßrohrs (2) ist und
--- mit der Mantellinie des Meßrohrs fluchtende Hauptflächen (311) sowie mindestens eine Frontkante (313) aufweist und
- mit einem Sackloch (314) versehen ist, von dem ein Boden in der Nähe der mindestens einen Frontkante (313) liegt,
- einen Temperatursensor (34), der am Boden des Sacklochs (314) oder in der Nähe des Bodens fixiert ist, und
-- ein an der zweiten Oberfläche (332) befestigtes Sensorelement (35).

2. Wirbelströmungsaufnehmer nach Anspruch 1, wobei die Hauptflächen der Sensorfahne einen Keil mit einer einzigen Frontkante (313, 313') bilden.

3. Wirbelströmungsaufnehmer nach einem der vorherigen Ansprüche, weiters umfassend einen von außen, am Meßrohr befestigten zweiten Temperatursensor.

4. Verwenden eines Wirbelströmungsaufnehmers nach einem der vorherigen Ansprüche zum Ermitteln eines Massedurchflusses des Fluids.

## Claims

1. Vortex flow sensor (1) for the measurement of the mass flow, volume flow or flow velocity of a fluid which flows in a flow direction in a measuring tube (2) of the vortex flow sensor (1), said measuring tube having a tube wall (21), wherein said vortex flow sensor comprises:
- a bluff body (4) arranged along a diameter of the measuring tube (2), said bluff body
-- serving to generate Karman vortices and
-- being connected from the inside to the tube wall of the measuring tube at a first and a second fixing point (41, 41') which are located opposite one another,
- a vortex sensor (3) responding to pressure fluctuations generated by the vortices, said sensor being inserted downstream from the bluff body in a bore (22) of the tube wall (21) of the measuring tube and sealing said bore,
- wherein the center of the bore (22) is located, together with the center of the first fixing point (41) of the bluff body (4), on a generating line of the measuring tube (2), and
- wherein the vortex sensor (3) comprises:
-- a membrane (33) covering the bore (22) with a first surface (331) facing towards the fluid and a second surface (332) facing away from the fluid,
-- a sensor tongue (31) secured to the first surface of the membrane, said tongue
--- being shorter than the diameter of the measuring tube (2) and
--- having main surfaces (311) that are aligned with the generating line, and at least one front edge (313) and
--- having a blind hole (314), the base of which is located near the at least one front edge (313),
-- a temperature sensor (34), which is located at the base of the blind hole (314) or close to the base, and
-- a sensor element (35) secured to the second surface (332).

2. Vortex flow sensor as claimed in Claim 1, wherein the main surfaces of the sensor tongue form a wedge with a single front edge (313, 313').

3. Vortex flow sensor as claimed in one of the previous claims, further comprising a second temperature sensor secured on the measuring tube on the outside.

4. Use of a vortex flow sensor as claimed in one of the previous claims for determining a mass flow of the fluid.

## Revendications

1. Débitmètre vortex (1) destiné à la mesure du débit massique, du débit volumique ou de la vitesse d'écoulement d'un fluide qui s'écoule dans un tube de mesure (2) du débitmètre vortex (1) dans un sens d'écoulement, lequel tube présente une paroi (21), lequel débitmètre vortex comprend :
- un corps de retenue (4) disposé le long d'un diamètre du tube de mesure (2), lequel corps de retenue
-- sert à la génération des tourbillons selon Karman et
-- est relié, sur un premier et un deuxième points de fixation (41, 41') qui se font face, avec la paroi du tube de mesure,
- un capteur vortex (3) réagissant aux fluctuations de pression générées par les tourbillons, lequel capteur est introduit en aval du corps de retenue, dans un perçage (22) de la paroi (21) du tube de mesure, et assure l'étanchéité de ce perçage,
- le centre du perçage (22) se situant, conjointement avec le centre du premier point de fixation (41) du corps de retenue (4), sur une génératrice du tube de mesure (2), et
- le capteur vortex (3) comprenant :
-- une membrane recouvrant le perçage (22) avec une première surface (331) faisant face au produit et une deuxième surface (332) située à l'opposé du produit,
-- une languette de capteur (31) fixée sur la première surface de la membrane, laquelle languette
--- est plus courte que le diamètre du tube de mesure (2) et
--- présente, avec la génératrice du tube de mesure, des surfaces principales (311) affleurantes ainsi qu'au moins une arête frontale (313) et
--- est munie d'un trou borgne (314), duquel un fond se situe à proximité de l'au moins une arête frontale (313),
-- un capteur de température (34), lequel est fixé au fond du trou borgne (314) ou à proximité du fond, et
-- un élément capteur (35) fixé sur la deuxième surface (332).

2. Débitmètre vortex selon la revendication 1, pour lequel les surfaces principales de la languette de capteur forment un coin avec une unique arête frontale (313, 313').

3. Débitmètre vortex selon l'une des revendications précédentes, comprenant en outre un deuxième capteur de température fixé de l'extérieur sur le tube de mesure.

4. Utilisation d'un débitmètre vortex selon l'une des revendications précédentes, destiné à la détermination d'un débit massique du fluide.
